# FASCICULE DE BREVET EUROPEEN

(11) **EP 3 230 575 B1**
(45) Date de publication et mention de la délivrance du brevet: **31.10.2018**
(21) Numéro de dépôt: 15817967.1
(22) Date de dépôt: 04.12.2015
(51) Int. Cl.: F02K 9/96

(54) **PROCEDE D'ESSAI**
TESTVERFAHREN
TESTING METHOD

(30) Priorité: 12.12.2014 FR 1462368
(43) Date de publication de la demande: 18.10.2017
(73) Titulaire: SAFRAN AIRCRAFT ENGINES, 75015 Paris (FR)
(72) Inventeur: VERELLEN, Alexis, 95320 Saint-Leu-la-Foret (FR); LE GONIDEC, Serge, 27200 Vernon (FR)
(74) Mandataire: Calvo de Nó, Rodrigo
(86) Numéro de dépôt international: PCT/FR2015/053321
(87) Numéro de publication internationale: WO 2016/092183

(56) Documents cités:
- FR-A1- 2 946 746
- RU-C1- 2 393 450

## Description

### Arrière-plan de l'invention

La présente invention concerne le domaine des essais techniques et plus particulièrement un procédé d'essai de machine.

Typiquement, dans l'essai d'une machine, on commande le fonctionnement de la machine suivant une séquence prédéterminée de points de fonctionnement, de manière à permettre l'évaluation du fonctionnement de la machine dans chacun de ces points de fonctionnement. Chaque point de fonctionnement est défini par une durée et un ensemble de paramètres de fonctionnement de la machine. Un tel procédé d'essai, appliqué à un moteur-fusée à ergols liquides, a été divulgué dans le brevet russe RU 2 393 450.

Ces essais peuvent être très coûteux, notamment quand ils concernent une machine de grande complexité technique, telle que par exemple un moteur-fusée à ergols liquides. Si l'essai doit être interrompu avant d'avoir atteint tous les points de fonctionnement que l'on souhaitait évaluer, soit par dysfonctionnement de la machine essayée, soit par épuisement de ressources telles que les ergols dans un essai de moteur-fusée, il faudra effectuer des nouveaux essais coûteux en temps et ressources, jusqu'à compléter l'ensemble des points de fonctionnement.

Dans la demande de brevet français FR 2 946 746 A1, un procédé d'essai a été proposé qui comprend les étapes suivantes :
détermination d'une pluralité de points de fonctionnement d'une machine à essayer, chaque point de fonctionnement étant défini par une durée minimale et une valeur spécifique d'au moins un paramètre de fonctionnement de la machine ;
calcul d'un ensemble de distances entre paires de points de fonctionnement ;
sélection d'une séquence optimale de points de fonctionnement en application d'un algorithme de résolution du problème du voyageur de commerce audit ensemble de distances entre paires de points de fonctionnement ; et
commande du fonctionnement de ladite machine suivant ladite séquence optimale de points de fonctionnement.

Toutefois, ce procédé de l'état de la technique ne permet pas de prendre en compte une éventuelle évolution des circonstances en cours d'essai, comme par exemple la consommation réelle de certaines ressources finies, telles qu'un carburant ou un ergol, ou des changements de priorité ou de risque des points de fonctionnement restants. Il peut être souhaitable de réarranger la séquence optimale en cours d'exécution d'essai, par exemple pour prendre en compte la consommation réelle, par la machine, aux points de fonctionnement déjà atteints, de certaines ressources finies, telles que, par exemple, un carburant ou ergol, et/ou pour prendre en compte des changements relatifs d'importance ou risque des divers points de fonctionnement en cours d'essai.

### Obiet et résumé de l'invention

La présente invention vise à remédier à ces inconvénients. L'invention vise à proposer un procédé d'essai d'une machine qui permette de réarranger la séquence optimale en cours d'exécution d'essai, par exemple pour prendre en compte la consommation réelle, par la machine, aux points de fonctionnement déjà atteints, de certaines ressources finies, telles que, par exemple, un carburant ou ergol, et/ou pour prendre en compte des changements relatifs d'importance ou risque des divers points de fonctionnement en cours d'essai, de manière à maximiser le nombre et/ou l'importance des points de fonctionnement atteints à la fin de l'essai. Ce but est atteint grâce au fait qu'il comprend en outre au moins les étapes supplémentaires suivantes, après qu'au moins un point de fonctionnement ait été atteint par la machine :
modification de coefficients de majoration et/ou minoration desdites distances ;
nouveau calcul dudit ensemble de distances avec les coefficients modifiés ; et
mise à jour de ladite séquence optimale en appliquant ledit algorithme de résolution du problème du voyageur de commerce audit ensemble de distances après leur nouveau calcul.

Grâce à ces dispositions, et notamment grâce à la modification, en cours d'essai, de coefficients de majoration et/ou minoration de distances entre paires de points de fonctionnement, il est possible d'optimiser encore plus chaque essai.

Ainsi, par exemple, après que tous les points de fonctionnement avec une priorité maximale aient été atteints, on peut neutraliser un coefficient de priorité de chacun des points de fonctionnement restants, de manière à ne plus prendre en compte la priorité des points de fonctionnement restants dans une mise à jour subséquente de la séquence optimale. On peut aussi, après que tous les points de fonctionnement avec un risque minimum aient été atteints, neutraliser un coefficient de risque de chacun des points de fonctionnement restants, de manière à ne plus prendre en compte le risque des points de fonctionnement restants dans une mise à jour subséquente de la séquence optimale..

La machine peut être une machine thermique, et notamment comprenant une ou plusieurs turbomachines. En particulier, la machine peut être un moteur-fusée à ergols liquides. Dans ce domaine, les essais sont particulièrement coûteux et soumis à d'importantes contraintes en temps et autres ressources, telles que la quantité d'ergols disponibles. En outre, le risque de défaillance d'un tel moteur-fusée à ergols liquides pendant certains points de fonctionnement, entraînant ainsi une interruption prématurée de l'essai, peut être particulièrement élevé. En conséquence, les avantages de l'invention sont particulièrement marqués dans son application à une telle machine. Néanmoins, elle est aussi applicable aux essais d'autres types de machines.

Quand la machine à essayer est un moteur-fusée à ergols liquides, chaque point de fonctionnement peut être caractérisé par des valeurs spécifiques d'au moins une pression en chambre de combustion et un rapport entre débits d'ergols. Toutefois, d'autres paramètres de fonctionnement peuvent aussi être utilisés alternativement ou en complément à ceux-là, comme par exemple des pressions des ergols en entrée de pompes d'alimentation.

Pour calculer une distance d'un point de fonctionnement dans une paire de points de fonctionnement à l'autre point de fonctionnement dans la paire, on peut notamment estimer un lapse de temps pour passer de l'un point de fonctionnement dans la paire à l'autre point de fonctionnement dans la paire. Ainsi, la séquence optimale sélectionnée suivant l'algorithme de résolution du problème du voyageur de commerce permettra de minimiser le temps nécessaire pour atteindre l'ensemble des points de fonctionnement et/ou maximiser le nombre de points de fonctionnement atteints dans un lapse de temps limité. En outre, la sélection de la séquence optimale pourra ainsi tenir compte de lapses de temps différents pour les passages entre points de fonctionnement d'une paire dans un sens et dans l'autre. Néanmoins, la distance entre points de fonctionnement peut aussi être basée sur d'autres critères : par exemple, en complément ou alternativement à l'estimation du lapse de temps, on pourrait estimer la quantité d'ergol à consommer pour passer de l'un point de fonctionnement de la paire à l'autre point de fonctionnement de la paire.

Dans certaines circonstances, on peut souhaiter ou être contraint à faire succéder dans l'essai au moins deux points de fonctionnement suivant une sous-séquence prédéterminée. Afin de forcer cette succession dans la séquence optimale sélectionnée suivant l'algorithme de résolution du problème du voyageur de commerce, les distances d'un point de fonctionnement désigné précédent à tous les autres points de fonctionnement sauf un point de fonctionnement désigné suivant peuvent être majorées de manière à forcer une succession directe du point de fonctionnement désigné précédent par le point de fonctionnement désigné suivant.

En outre, certains points de fonctionnement peuvent être plus prioritaires que d'autres. Pour prendre en compte cette priorité dans la sélection de la séquence optimale, au moins une distance d'un premier point de fonctionnement à un deuxième point de fonctionnement peut être minorée ou majorée suivant un coefficient de priorité associé audit deuxième point de fonctionnement. Ainsi, on peut minorer les distances pour arriver aux points de fonctionnement les plus prioritaires, depuis tous les autres points de fonctionnement, facilitant ainsi que les points de fonctionnement les plus prioritaires soient arrangés en début de la séquence optimale.

D'autre part, d'autres points de fonctionnement peuvent présenter un risque particulièrement élevé d'interruption prématurée de l'essai. Pour prendre en compte ce risque dans la sélection de la séquence optimale, une distance d'un premier point de fonctionnement à un deuxième point de fonctionnement peut être majorée ou minorée suivant un coefficient de risque associé audit deuxième point de fonctionnement. Ainsi, on peut majorer les distances pour arriver aux points de fonctionnement les plus risqués, depuis tous les autres points de fonctionnement, facilitant ainsi que les points de fonctionnement les plus risqués soient arrangés en queue de la séquence optimale.

Les algorithmes de résolution du problème du voyageur de commerce sont normalement adaptés pour donner une solution en forme de circuit, avec le point final dans la séquence à proximité du point de départ. Toutefois, dans cette application, il peut ne pas être souhaité d'obtenir une séquence en forme de circuit. Pour éviter cela, il est possible de majorer toutes les distances d'un point de fonctionnement de départ à tous les autres points de fonctionnement. En rendant ainsi le point de fonctionnement de départ identiquement distant, ou presque, de tous les autres points de fonctionnement, on minimise la tendance des algorithmes de résolution du voyageur de commerce à sélectionner une séquence optimale en forme de circuit, avec un point de fonctionnement final proche du point de fonctionnement de départ.

Le procédé d'essai suivant cette divulgation peut notamment être mis en oeuvre dans un banc d'essai à commande numérique. En conséquence, cette invention concerne également un programme informatique comprenant un ensemble d'instructions destinées à mettre en oeuvre le procédé d'essai susmentionné, ainsi, qu'un dispositif informatique programmé pour mettre en oeuvre ce procédé d'essai, et un support informatique comprenant des instructions exécutables par un dispositif informatique pour mettre en oeuvre ce procédé d'essai. Dans le présent contexte, on entend par « support informatique » tout dispositif de stockage de données pouvant être lu par un dispositif informatique. Un tel support informatique peut notamment être un dispositif de stockage magnétique de données, tel qu'un disque ou bande magnétique, un dispositif de stockage optique de données, tel qu'un disque optique, ou un dispositif de stockage électronique de données, tel qu'une mémoire électronique volatile ou non-volatile.

### Brève description des dessins

L'invention sera bien comprise et ses avantages apparaîtront mieux, à la lecture de la description détaillée qui suit, de modes de réalisation représenté à titre d'exemples non limitatifs. La description se réfère aux dessins annexés sur lesquels :
- la figure 1 est une vue schématique d'un moteur-fusée à ergols liquides ;
- la figure 2 est un schéma des étapes d'un procédé d'essai suivant un mode de réalisation ;
- la figure 3 est un graphique représentant l'évolution de coefficients de risque pendant l'exécution de l'essai suivant un mode de réalisation du procédé.

### Description détaillée de l'invention

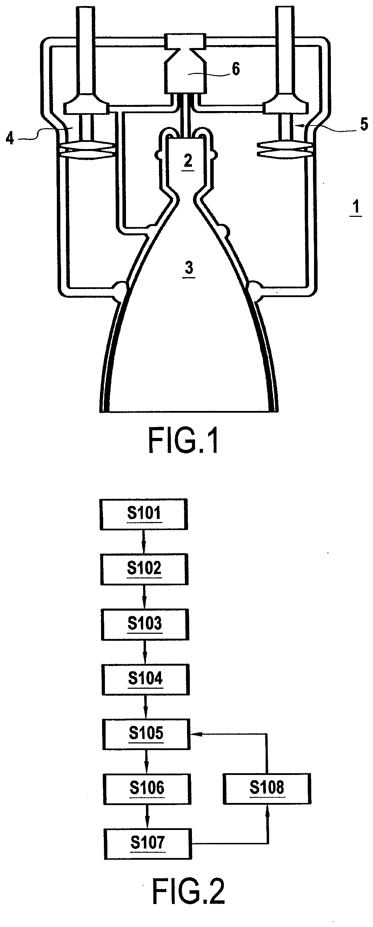

La figure 1 montre une vue schématique d'un moteur-fusée 1 à ergols liquides. Ce moteur-fusée 1 comprend une chambre de combustion 2, prolongée par une tuyère convergente-divergente 3, ainsi qu'une première turbopompe 4, une deuxième turbopompe 5 et un générateur de gaz 6 destinés à assurer l'alimentation en ergols de la chambre de combustion 2 à partir de réservoirs correspondants (non illustrés). Chacune des turbopompes comprend au moins une pompe et une turbine reliées par un arbre rotatif commun, de manière à ce que la pompe puisse être actionnée par la turbine à travers l'arbre rotatif.

En fonctionnement, un premier ergol liquide, qui peut par exemple être un ergol cryogénique comme l'hydrogène liquide, est pompé par la première turbopompe 4 vers la chambre de combustion 2 et vers le générateur de gaz 6. Un deuxième ergol, qui peut aussi être un ergol cryogénique comme l'oxygène liquide, est pompé par la deuxième turbopompe 5 aussi vers la chambre de combustion 2 et vers le générateur de gaz 6. Dans la chambre de combustion 2, une réaction chimique exothermique entre les deux ergols génère des gaz de combustion à haute température, accélérés ensuite à vitesse supersonique par leur détente dans la tuyère 3, de manière à générer une poussée par réaction dans le sens opposé. Comme illustré, les parois de la tuyère 3 peuvent être refroidies par les ergols avant leur injection dans la chambre de combustion 2. D'autre part, la fraction des ergols alimentant le générateur de gaz 6 y réagit aussi de manière exothermique pour générer des gaz de combustion à haute température, dont la détente dans les turbines des deux turbopompes 4, 5 en assure l'actionnement.

Des moteurs-fusées suivant des configurations différentes sont également envisageables. Ainsi, par exemple, dans les moteurs-fusées dits à cycle expandeur, les turbopompes ne sont pas actionnées par des gaz de combustion provenant d'un générateur de gaz, mais par au moins un des ergols après avoir été chauffé par de la chaleur générée dans la chambre de combustion. La présente invention est également applicable dans ces configurations alternatives, ainsi qu'aux essais d'autres types de machines, et en particulier de machines thermiques et de turbomachines.

La figure 2 illustre schématiquement les étapes d'un procédé d'essai d'un tel moteur-fusée suivant un mode de réalisation. Dans une étape d'initialisation S101, on détermine l'ensemble de points de fonctionnement du moteur-fusée qu'on souhaite tester. Chaque point de fonctionnement peut être caractérisé par une durée minimale et un ensemble de paramètres de fonctionnement, comme par exemple une pression dans la chambre de combustion 2 et un rapport entre un débit (massique ou volumique) du premier ergol en entrée de la première turbopompe 4 et un débit (massique ou volumique) du deuxième ergol en entrée de la deuxième turbopompe 5. Alternativement ou en complément à ces paramètres de fonctionnement, on peut utiliser d'autres paramètres de fonctionnement, et notamment ceux connus comme « conditions d'interface », c'est-à-dire la pression du premier ergol en entrée de la première turbopompe 4 et la pression du deuxième ergol en entrée de la deuxième turbopompe.

Dans l'étape suivante S102, on détermine un premier ensemble de distances entre points de fonctionnement. Dans ce premier ensemble, chaque distance c(A,B) d'un premier point de fonctionnement A à un deuxième point de fonctionnement B dans ce premier ensemble peut être définie comme correspondant au temps nécessaire pour faire passer le moteur-fusée du point de fonctionnement A au point de fonctionnement B. Alternativement au temps, cette distance peut-être un volume et/ou masse d'ergol consommé pendant la transition, ou bien une fonction d'au moins un du temps et de la quantité d'ergol. Il faut noter que ces distances ne sont pas nécessairement symétriques, c'est-à-dire que la distance c(A,B) peut être différente de la distance c(B,A), puisqu'il peut être plus ou moins difficile de passer du point de fonctionnement A au point de fonctionnement B que vice versa. Cet ensemble de distances peut être exprimé sous la forme d'une matrice carrée.

Ensuite, dans l'étape suivante S103, les distances du point de fonctionnement de départ à tous les autres points de fonctionnement sont majorées. Idéalement, ces distances pourraient être rendues infinies, mais à cause des ressources numériques limitées disponibles, on peut se contenter de majorer ces distances de plusieurs ordres de grandeur. L'objet de cette majoration est d'éviter que, lors de l'application subséquente d'un algorithme de résolution du problème du voyageur de commerce, soit calculée une séquence de points de fonctionnement qui finisse nécessairement à proximité du point de fonctionnement de départ. En effet, les algorithmes de résolution du problème du voyageur de commerce résultent normalement en une solution en forme de circuit, avec un point d'arrivée proche du point de départ. Une telle solution n'étant pas nécessairement adaptée au présent problème, on éloigne donc artificiellement le point de fonctionnement de départ de tous les autres points de fonctionnement afin de l'éviter.

La majoration des distances peut aussi servir à forcer la succession de certains points par d'autres dans la séquence résultante de l'application subséquente de l'algorithme de résolution du problème du voyageur de commerce. Ainsi, dans l'étape suivante S104, quand on a désigné deux points de fonctionnement comme devant nécessairement se succéder dans l'essai, les distances du point de fonctionnement désigné précédent à tous les autres points de fonctionnement sauf le point de fonctionnement désigné suivant sont majorées de manière à forcer une succession directe, dans la séquence qui sera calculée par l'algorithme de résolution du problème du voyageur de commerce, du point de fonctionnement désigné précédent par le point de fonctionnement désigné suivant. Ceci peut être naturellement mis en oeuvre pour plus de deux points de fonctionnement. Idéalement, ces distances majorées pourraient aussi être rendues infinies, mais à cause des ressources numériques limitées disponibles, on peut également se contenter de majorer ces distances de plusieurs ordres de grandeur.

Dans l'étape suivante S105, un coefficient de priorité kₚ et un coefficient de priorité kᵣ sont appliqués aux distances c(A,B) de ce premier ensemble de distances, pour obtenir un deuxième ensemble de distances c'(A,B) suivant la formule c'(A,B)=c(A,B)·kₚ·kᵣ. Ce deuxième ensemble de distances peut également être exprimé en forme de matrice carrée, comme le premier ensemble.

Le coefficient de priorité kₚ appliqué à chaque distance c(A,B) d'un premier point de fonctionnement A à un deuxième point de fonctionnement B dépend d'une priorité préalablement accordée à ce deuxième point de fonctionnement B. Plus précisément, le coefficient de priorité kₚ diminue avec une priorité croissante du deuxième point de fonctionnement B. Ainsi, toutes les distances vers les points de fonctionnement les plus prioritaires peuvent être minorées, tandis que toutes celles vers les points de fonctionnement les moins prioritaires peuvent être majorées, de manière à privilégier le passage par les points de fonctionnement les plus prioritaires lors de la résolution du problème du voyageur de commerce. Par exemple, avec trois niveaux de priorité, le coefficient de priorité kₚ appliqué aux distances vers les points de fonctionnement les plus prioritaires peut recevoir une valeur de 0,8, et celui appliqué aux distances vers les points de fonctionnement les moins prioritaires peut recevoir une valeur de 1,2, tandis que les distances vers les points de fonctionnement à priorité intermédiaire reçoivent une valeur neutre de 1. Toutefois, d'autres valeurs, voire un nombre différent de niveaux de priorité peuvent être appliqués suivant les circonstances.

Le coefficient de risque kᵣ appliqué à chaque distance c(A,B) d'un premier point de fonctionnement A à un deuxième point de fonctionnement B dépend d'un niveau de risque associé à ce deuxième point de fonctionnement B. Plus précisément, au moins initialement, le coefficient de risque augmente avec un niveau de risque croissant associé au deuxième point de fonctionnement. Ainsi, toutes les distances vers les points de fonctionnement les plus risqués peuvent être initialement majorées, de manière à privilégier, ou même forcer le passage par les points de fonctionnement les moins risqués d'abord. Toutefois, comme il sera expliqué ci-dessous, les valeurs du coefficient de risque kᵣ peuvent évoluer pendant l'exécution de l'essai.

Dans l'étape suivante S106, un algorithme de résolution du problème du voyageur de commerce, tel que par exemple l'algorithme heuristique de Lin-Kernighan (algorithme LKH), est appliqué au deuxième ensemble de distances c'(A,B), de manière à sélectionner une séquence optimale de points de fonctionnement, qui commence à être appliquée dans l'étape S107, dans laquelle on exécute l'essai en commandant le fonctionnement du moteur-fusée 1 suivant d'abord au moins les points de fonctionnement initiaux suivant la séquence optimale.

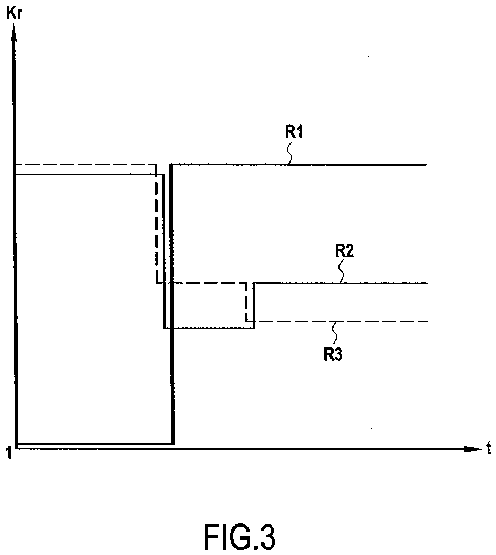

Pendant l'exécution de l'essai, on peut néanmoins procéder à une ou plusieurs mises à jour de cette séquence optimale, en actualisant notamment les données concernant les points de fonctionnement déjà couverts, et les ressources consommées pendant ces points de fonctionnement, en particulier le temps et/ou la quantité d'ergols. En outre, comme brièvement mentionné ci-dessus, on peut modifier dans l'étape S108 les valeurs du coefficient de risque kᵣ pendant l'essai. Un exemple d'une telle évolution du coefficient de risque kᵣ en fonction du temps t est illustré sur la Figure 3. Suivant cet exemple, on attribue trois niveaux de risque R1, R2 et R3 aux différents points de fonctionnement. Initialement, le coefficient de risque kᵣ appliqué aux distances vers les points de fonctionnement avec le niveau de risque moins élevé, R1, reçoit une valeur neutre de 1, tandis que ceux appliqués aux distances vers les points de fonctionnement avec les niveaux de risque plus élevés R2 et R3 reçoivent des valeurs très élevées de manière à forcer l'algorithme de résolution du problème du voyageur de commerce à commencer la séquence optimale par les points de fonctionnement moins risqués. Quand on approche la fin de l'essai, la valeur du coefficient de risque kᵣ appliqué aux distances vers les points de fonctionnement avec le niveau de risque le moins élevé, R1, peut être augmenté sensiblement, de manière à bloquer les points de fonctionnement à bas risque qui n'aient pas encore été atteints, tandis que les valeurs de ceux appliqués aux distances vers les points de fonctionnement avec les niveaux de risque plus élevés R2 et R3 sont diminuées, de manière à permettre leur sélection. Dans un premier temps, la valeur du coefficient de risque kᵣ appliqué aux distances vers les points de fonctionnement à risque intermédiaire, niveau de risque R2, peuvent diminuer plus que les distances vers les points de fonctionnement au niveau de risque le plus élevé, R3, de manière à favoriser le passage par les premiers plutôt que les seconds. Vers la fin de l'essai, cette relation peut encore être inversé, de manière à favoriser plutôt le passage par les points de fonctionnement au risque le plus élevé.

Après l'actualisation de ces données, on répète les étapes S105 et S106 pour recalculer le deuxième ensemble de distances c'(A,B) avec les données actualisées et la séquence optimale avec ce deuxième ensemble de distances, et on poursuit l'essai avec l'étape S107.

Ce procédé d'essai peut être mis en oeuvre par le moyen d'un banc d'essai à commande numérique. Un tel banc d'essai peut comprendre une unité de commande apte à être relié à la machine à tester afin de commander son fonctionnement. Cette unité de commande peut aussi être programmée pour effectuer la sélection de la séquence optimale avant l'essai et/ou pour sa mise à jour en cours d'essai, en fonction des données actualisées grâce à des mesures obtenues par des capteurs intégrés ou connectés audit banc d'essai.

Quoique la présente invention ait été décrite en se référant à des exemples de réalisation spécifiques, il est évident que des différentes modifications et changements peuvent être effectués sur ces exemples sans sortir de la portée générale de l'invention telle que définie par les revendications. En outre, des caractéristiques individuelles des différents modes de réalisation évoqués peuvent être combinées dans des modes de réalisation additionnels. Par conséquent, la description et les dessins doivent être considérés dans un sens illustratif plutôt que restrictif.

## Revendications

1. Procédé d'essai d'une machine, comprenant les étapes suivantes :
détermination (S101) d'une pluralité de points de fonctionnement de ladite machine, chaque point de fonctionnement étant défini par une durée minimale et une valeur spécifique d'au moins un paramètre de fonctionnement de la machine ;
calcul d'un ensemble de distances entre paires de points de fonctionnement ;
sélection (S106) d'une séquence optimale de points de fonctionnement en application d'un algorithme de résolution du problème du voyageur de commerce audit ensemble de distances entre paires de points de fonctionnement ; et
commande (S107) du fonctionnement de ladite machine suivant ladite séquence optimale de points de fonctionnement ; et
le procédé étant **caractérisé en ce qu'**il comprend en outre au moins les étapes supplémentaires suivantes, après qu'au moins un point de fonctionnement ait été atteint par la machine :
modification de coefficients de majoration et/ou minoration desdites distances ;
nouveau calcul dudit ensemble de distances avec les coefficients modifiés ; et
mise à jour de ladite séquence optimale en appliquant ledit algorithme de résolution du problème du voyageur de commerce audit ensemble de distances après leur nouveau calcul.

2. Procédé d'essai suivant la revendication 1, dans lequel ladite machine est un moteur-fusée (1) à ergols liquides.

3. Procédé d'essai suivant la revendication 2, dans lequel chaque point de fonctionnement est **caractérisé par** des valeurs spécifiques d'au moins une pression en chambre de combustion (2) et un rapport entre débits d'ergols.

4. Procédé d'essai suivant l'une quelconque des revendications précédentes, dans lequel, pour calculer une distance d'un point de fonctionnement dans une paire de points de fonctionnement à l'autre point de fonctionnement dans la paire, on estime un lapse de temps pour passer de l'un point de fonctionnement dans la paire à l'autre point de fonctionnement dans la paire.

5. Procédé d'essai suivant l'une quelconque des revendications précédentes, dans lequel les distances d'un point de fonctionnement désigné précédent à tous les autres points de fonctionnement sauf un point de fonctionnement désigné suivant sont majorées de manière à forcer une succession directe, dans la séquence optimale, du point de fonctionnement désigné précédent par le point de fonctionnement désigné suivant.

6. Procédé d'essai suivant l'une quelconque des revendications précédentes, dans lequel une distance d'un premier point de fonctionnement à un deuxième point de fonctionnement est minorée ou majorée suivant un coefficient de priorité associé audit deuxième point de fonctionnement.

7. Procédé d'essai suivant l'une quelconque des revendications précédentes, dans lequel une distance d'un premier point de fonctionnement à un deuxième point de fonctionnement est majorée ou minorée suivant un coefficient de risque associé audit deuxième point de fonctionnement.

8. Procédé d'essai suivant l'une quelconque des revendications précédentes, dans lequel sont majorées toutes les distances d'un point de fonctionnement de départ à tous les autres points de fonctionnement.

9. Programme informatique comprenant un ensemble d'instructions destinées à mettre en oeuvre un procédé d'essai suivant l'une quelconque des revendications précédentes.

10. Support informatique apte à être lu par un dispositif informatique et comprenant des instructions exécutables par le dispositif informatique suite à la lecture du support informatique pour mettre en oeuvre un procédé d'essai suivant l'une quelconque des revendications 1 à 8.

## Patentansprüche

1. Verfahren zum Testen einer Maschine, umfassend die folgenden Schritte:
Bestimmen (S101) einer Vielzahl von Betriebspunkten der Maschine, wobei jeder Betriebspunkt durch eine minimale Dauer und einen spezifischen Wert mindestens eines Betriebsparameters der Maschine definiert wird,
Berechnen einer Gesamtheit von Distanzen zwischen Paaren von Betriebspunkten,
Auswählen (S106) einer optimalen Sequenz der Betriebspunkte durch Anwenden eines Algorithmus zur Lösung des Problems des Handlungsreisenden auf die Gesamtheit der Distanzen zwischen Paaren der Betriebspunkte, und
Steuern (S107) des Betriebs der Maschine gemäß der optimalen Sequenz der Betriebspunkte, und wobei
das Verfahren **dadurch gekennzeichnet ist, dass** es außerdem mindestens einen der folgenden ergänzenden Schritte umfasst, nachdem mindestens ein Betriebspunkt von der Maschine erreicht wurde:
Modifizieren der Majorisierungs- und/oder Minorisierungskoeffizienten der Distanzen,
erneutes Berechnen der Gesamtheit der Distanzen mit den modifizierten Koeffizienten, und
Aktualisieren der optimalen Sequenz durch Anwenden des Algorithmus zur Lösung des Problems des Handlungsreisenden auf die Gesamtheit der Distanzen nach dem erneuten Berechnen.

2. Testverfahren nach Anspruch 1, wobei die Maschine ein Raketentriebwerk (1) mit flüssigen Treibstoffen ist.

3. Testverfahren nach Anspruch 2, wobei jeder Betriebspunkt durch spezifische Werte mindestens eines Drucks in der Verbrennungskammer (2) und eines Verhältnisses zwischen Treibstoffdurchsätzen gekennzeichnet ist.

4. Testverfahren nach einem der vorhergehenden Ansprüche, wobei, zum Berechnen einer Distanz eines Betriebspunkts in einem Paar von Betriebspunkten zu einem anderen Betriebspunkt in dem Paar, das Verstreichen einer Zeit geschätzt wird, um einen Betriebspunkt in dem Paar zum anderen Betriebspunkt in dem Paar zu führen.

5. Testverfahren nach einem der vorhergehenden Ansprüche, wobei die Distanzen eines als vorhergehend bezeichneten Betriebspunkts zu allen anderen Betriebspunkten außer einem als nachfolgend bezeichneten Betriebspunkt majorisiert werden, um eine direkte Folge, in der optimalen Sequenz, des als vorhergehend bezeichneten Punkts zu dem als nachfolgend bezeichneten Punkt zu erzwingen.

6. Testverfahren nach einem der vorhergehenden Ansprüche, wobei eine Distanz eines ersten Betriebspunkts zu einem zweiten Betriebspunkt gemäß einem Prioritätskoeffizienten minorisiert oder majorisiert wird, der mit dem zweiten Betriebspunkt assoziiert ist.

7. Testverfahren nach einem der vorhergehenden Ansprüche, wobei eine Distanz eines ersten Betriebspunkts zu einem zweiten Betriebspunkt gemäß einem Risikokoeffizienten majorisiert oder minorisiert wird, der mit dem zweiten Betriebspunkt assoziiert ist.

8. Testverfahren nach einem der vorhergehenden Ansprüche, wobei alle Distanzen eines Ausgangsbetriebspunkts zu allen anderen Betriebspunkten majorisiert werden.

9. Computerprogramm, umfassend eine Gesamtheit von Instruktionen, die dazu bestimmt sind, ein Testverfahren nach einem der vorhergehenden Ansprüche durchzuführen.

10. Speichermedium, welches dazu geeignet ist, von einer Computervorrichtung gelesen zu werden, und umfassend Instruktionen, die von der Computervorrichtung nach dem Lesen des Speichermediums ausgeführt werden können, um ein Testverfahren nach einem der Ansprüche 1 bis 8 durchzuführen.

## Claims

1. A method of testing a machine, the method comprising the following steps:
determining (S101) a plurality of operating points for said machine, each operating point being defined by a minimum duration and a specific value of at least one operating parameter of the machine;
calculating a set of distances between pairs of operating points;
selecting (S106) an optimum sequence of operating points by applying an algorithm for solving the traveling salesman problem to said set of distances between pairs of operating points; and
controlling (S107) the operation of said machine according to said optimum sequence of operating points; and
the method being **characterized in that**, after the machine has reached at least one operating point, the method further comprises at least the following additional steps:
modifying coefficients for increasing and/or decreasing said distances;
calculating said set of distances once more with the modified coefficients; and
updating said optimum sequence by applying said algorithm for solving the traveling salesman problem to said set of distances after they have been recalculated.

2. A test method according to claim 1, wherein the machine is a liquid-propellant rocket-engine (1).

3. A test method according to claim 2, wherein each operating point is **characterized by** specific values for at least one pressure in the combustion chamber (2) and for a ratio between propellant flow rates.

4. A test method according to any preceding claim, wherein a distance from one operating point in a pair of operating points to the other operating point in the pair is calculated by estimating a time lapse for passing from said one operating point in the pair to the other operating point in the pair.

5. A test method according to any preceding claim, wherein the distances from a designated preceding operating point to all of the other operating points with the exception of a designated following operating point are increased so as to force a direct succession in the optimum sequence from the designated preceding operating point to the designated following operating point.

6. A test method according to any preceding claim, wherein a distance from a first operating point to a second operating point is decreased or increased using a priority coefficient associated with said second operating point.

7. A test method according to any preceding claim, wherein a distance from a first operating point to a second operating point is increased or decreased using a risk coefficient associated with said second operating point.

8. A test method according to any preceding claim, wherein all of the distances from a starting operating point to all of the other operating points are increased.

9. A computer program comprising a set of instructions for performing a test method according to any preceding claim.

10. A data medium suitable for being read by a computer device and comprising instructions executable by the computer device after reading the data medium in order to perform a test method according to any one of claims 1 to 8.
